(19) Europäisches Patentamt
European Patent Office
Office européen des brevets

(11) **EP 2 169 086 B1**

(12) **EUROPÄISCHE PATENTSCHRIFT**

(45) Veröffentlichungstag und Bekanntmachung des Hinweises auf die Patenterteilung:
**12.11.2014 Patentblatt 2014/46**

(51) Int Cl.:
*C22B 34/24* *(2006.01)*   *B22F 9/24* *(2006.01)*
*H01G 9/052* *(2006.01)*

(21) Anmeldenummer: **09175881.3**

(22) Anmeldetag: **07.09.2006**

(54) **Ventilmetallpulver**

Refractory metal powder

Poudre de métal réfractaire

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.09.2005 DE 102005044280**

(43) Veröffentlichungstag der Anmeldung:
**31.03.2010 Patentblatt 2010/13**

(62) Dokumentnummer(n) der früheren Anmeldung(en) nach Art. 76 EPÜ:
**06791958.9 / 1 957 684**

(73) Patentinhaber: **H.C. Starck GmbH**
**38642 Goslar (DE)**

(72) Erfinder:
• **Löffelholz, Josua**
**38685, Langelsheim (DE)**
• **Hilpert, Jürgen**
**38321, Denkte (DE)**

(56) Entgegenhaltungen:
**EP-A1- 1 418 012      DE-A1- 10 307 716**
**JP-A- 2004 091 889   US-A- 4 684 399**
**US-A- 5 442 978**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein verbessertes Ventilmetall-Elektrolytkondensatorpulver, insbesondere Tantal.

Ventilmetalle, worunter insbesondere Tantal und dessen Legierungen, sowie andere Metalle der Gruppe IVB (Ti, Zr, Hf) Vb (V, Nb, Ta), und Vlb (Cr, Mo, W) des Periodensystems der Elemente sowie deren Legierungen zu verstehen sind, finden bei der Bauteilherstellung vielfältige Verwendung. Besonders hervorzuheben ist der Einsatz von Niob, und Tantal zur Herstellung von Kondensatoren.

Bei der Herstellung von Niob, oder Tantalkondensatoren geht man üblicherweise von entsprechenden Metallpulvern aus, welche zunächst verpreßt und anschließend gesintert werden, um einen porösen Körper zu erhalten. Dieser wird in einem geeigneten Elektrolyten anodisiert, wobei sich ein dielektrischer Oxidfilm auf dem Sinterkörper ausbildet. Die physikalischen und chemischen Eigenschaften der eingesetzten Metallpulver haben einen entscheidenden Einfluß auf die Eigenschaften des Kondensators. Entscheidende Charakteristika sind beispielsweise die spezifische Oberfläche und der Gehalt an Verunreinigungen.

Tantalpulver einer Qualität, die den Einsatz Herstellung von Kondensatoren erlaubt, wird üblicherweise durch Natriumreduktion von K2TaF7 hergestellt. Dabei wird K2TaF7 in einer Retorte vorgelegt und durch flüssiges Natrium reduziert. Dabei entsteht ein hochporöses Agglomerat aus Primärkörnern. Der Kontrolle der Korngröße sowohl des Agglomerats als auch des Primärkorns sowie der Porosität kommt bei dieser Reaktion eine besondere Bedeutung zu. Die Korngröße des Primärkorns ist proportional zur spezifischen Oberfläche und damit proportional zur spezifischen Kapazität des später daraus hergestellten Kondensators. Besonders entscheidend ist dabei eine möglichst gleiche Korngröße jedes einzelnen Korns, da es für jede Formierspannung eine optimale Korngröße des Primärkorns gibt, welches die höchste spezifische Kapazität ergibt. Die Kornform, Korngröße und Porosität des Agglomerats bestimmt die späteren Verarbeitungseigenschaften wie Fließfähigkeit und Imprägnierbarkeit sowie die sich daraus ableitenden elektrischen Eigenschaften wie Elektrischen Serienwiderstand (ESR) und Impedanz (ESL). Daraus kann man ableiten, dass für jede Anwendung gekennzeichnet durch gewünschtes Kapazitätsniveau und Anwendungsspannung sowie Anodengröße ein Korn mit optimaler Primär- und Agglomeratkorngröße die besten Ergebnisse bringt.

Aus US-A 5 442 978 ist bekannt, daß die Kornfeinheit durch Reaktionstemperatur, Überschuß an Reduktionsmittel sowie Verdünnungsverhältnis von K2TaF7 in der Salzschmelze beeinflußt werden kann. US-A 5 442 978 schlägt daher vor, zur Herstellung von Tantalpulver mit hoher spezifischer Oberfläche hoch verdünntes K2TaF7 durch schrittweise Zugabe von Natrium herzustellen, wobei die Zugabe mit einer hohen Rate erfolgt. Bei dieser Umsetzung treten im Verlauf ungleichmäßige Konzentrationsverhältnisse auf, so daß die Korngrößenverteilung des entstehenden Pulvers sehr breit ist.

Gemäß US A-4 684 399 ist es vorteilhaft, die Tantalverbindung während der Reaktion kontinuierlich oder schrittweise zuzugeben. Durch diese Maßnahme bleibt die Konzentration während es Reduktionsprozesses gleichförmig.

In DE 33 30 455 A1 wird ein Dotierungsmittel der Reaktion zugesetzt, mit dem Ziel feinere Körnung zu erhalten. Dies erlaubt die weitgehende Kontrolle des Primärkorns, jedoch nicht die Kontrolle des Agglomeratkorns, da diese auf Grund des Batchprozesses eine für Rührkessel typische breite Verteilung der Agglomeratkorngröße ergibt. In der technischen Praxis wird dieses Korn daher zunächst weiter thermisch agglomeriert und durch mechanische Verfahren (Mahlen, fraktioniertes Sieben, Sichten) aufwendig in die gewünschte Korngrößenverteilung gebracht. In CN 1443618 ist ein Verfahren beschrieben, welches ebenfalls zu gleichförmigen Tantalpulvern kommt, die jedoch verfahrensgemäß mit Magnesium >20 ppm verunreinigt sind. Höhere Magnesiumverunreinigungen können sich jedoch auf die späteren elektrischen Eigenschaften des Pulvers negativ auswirken, besonders auf den Reststrom.

Aufgabe der vorliegenden Erfindung ist es, ein Ta-Pulver mit gleichförmiger Agglomerat- und Prmärkorngröße herzustellen, welches Mg Verunreinigungen <20 ppm, bevorzugt < 10 ppm, optimierte spezifische Kapazitätswerte bei gegebener Formierspannung und einen Formfaktor nahe 1 aufweist.

Diese Aufgabe wird gelöst durch ein Ventilmetallpulver gemäß Anspruch 1. Die Ventilmetallpulver gemäß vorliegender Erfindung lassen sich herstellen durch ein Verfahren , umfassend

- das Schmelzen eines Gemisches, das einen Ventilmetall-Precursor und Verdünnungsmittel enthält, in einem ersten Gefäß;
- das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird.

Das Verhältnis von Verdünnungssalz zu Ventilmetall-Precursor ist in der Regel größer als 1:5, meist größer als 1:20.

Temperatur und Verweilzeit im zweiten Gefäß können unabhängig voneinander unterschiedlich oder gleich den jeweiligen Bedingungen im ersten Gefäß sein.

Das Gemisch aus dem Ventilmetall-Precursor und dem Verdünnungsmittel wird in dem ersten Gefäß gemischt und aufgeschmolzen. Dabei wird die das Gemisch im Allgemeinen gerührt oder auf eine andere Weise bewegt, so dass das Gemisch homogenisiert wird. Das Gemisch wird dann in ein zweites Gefäß überführt, in welchem die Reaktion des Ventilmetall-Precursors zu einem Ventilmetall initiiert wird. Dabei herrscht im zweiten Gefäß eine gleiche oder von der Temperatur im ersten Gefäß verschiedene Temperatur. Auch die Verweilzeit kann mit der Verweilzeit des Gemisches im ersten Gefäß gleich oder verschieden sein.

Die Gesamtmenge an eingesetztem Reduktionsmittel beträgt meist das 0,9 bis 1,5-fache, oder aber das 1 bis 1,05-fache der stöchiometrisch benötigten Menge zur vollständigen Reduktion des Ventilmetall-Precursors.

In einer weiteren Ausführungsform umfasst das Verfahren darüber hinaus das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

In einer weiteren Ausführungsform umfasst das Verfahren darüber hinaus das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

Das Übertragen des Gemisches kann auf beliebige Weise erfolgen. Da das Verfahren kontinuierlich durchgeführt werden kann, folgt eine zwangsläufige Übertragung des Gemisches von einem Gefäß in das nächste, wenn im ersten Gefäß kontinuierlich neues Gemisch geschmolzen und homogenisiert wird. Durch einen Überlauf kann dann das Gemisch von einem Gefäß in das folgende Gefäß übertragen werden. Die Verweilzeit für die Reaktionen lässt sich somit durch die Geschwindigkeit kontrollieren, mit der Gemische in die Gefäße eingeleitet und aus diesen übertragen werden. In einer weiteren Ausführungsform kann durch die Verwendung eines absenkbaren Verdrängungskörpers in den jeweiligen Gefäßen die Verweilzeit kontrolliert oder das Gemisch auch schubweise in den nächsten Kessel überführt werden.

Die Kontrolle der Verweilzeit beeinflusst die Größe, Dichte, Oberfläche und die Schüttdichte der Partikel. Die Temperatur kann diese Produkteigenschaften ebenfalls beeinflussen; höherer Temperaturen tragen zwar einerseits zu einer Beschleunigung der Reaktion und somit zu einer Erzeugung feinerer Partikel bei, andererseits führen höhere Temperaturen auch zu einer Verklumpung (Agglomeration) der Partikel und somit gröberer Partikel mit einer niedrigeren Oberfläche. Unter der Verweilzeit versteht man den Zeitraum, in dem eine Reaktion oder Reaktionen stattfinden. Die totale oder Gesamtverweilzeit des Verfahrens ist die Summe der Verweilzeit in jedem Reaktionsgefäß. Die minimale Verweilzeit für das Verfahren ist eine Verweilzeit, die zum Ausfällen eines Ventilmetalls ausreicht. Die maximale Verweilzeit des Verfahrens ist im Allgemeinen durch das gewünschte Produkt und die Verfahrensökonomie vorgegeben. Für gegebene Reaktionsbedingungen und eine gegebene Temperatur sind im Allgemeinen kürzere Gesamtverweilzeiten erwünscht zum Herstellen kleiner Partikelgrößen, und längere Verweilzeiten sind erwünscht zur Herstellung hoher Partikelgrößen. Es ist meist vorteilhaft wenn die Gesamtverweilzeit die kürzeste Zeit ist, die im Wesentlichen eine vollständige Umwandlung des Ventilmetall-Precursors in das gewünschte Ventilmetall erlaubt.

Die Verweilzeiten liegen im Allgemeinen bei 5 bis 30 Minuten pro Gefäß. Die Gesamtverweilzeit liegt in der Regel zwischen 10 Minuten und 4 Stunden, insbesondere 20 bis 120 Minuten.

Als Gefäß lassen sich vorteilhaft Reaktoren verwenden, die einen Zu- und Abfluss von Stoffen, eine Regelung der Temperatur durch Erwärmung oder Abkühlung sowie das Rühren des Reaktorinhaltes gestatten. Hierbei haben sich kontinuierliche Tankreaktoren mit Rührwerk bewährt, beispielsweise Kaskaden-Absaugrohr-Reaktorsysteme, in welchen die Temperaturen und Verweilzeiten im Wesentlichen gleich oder verschieden sein und unabhängig voneinander kontrolliert werden können. Die Temperatur der Gefäße kann durch herkömmliche Mittel wie Heiz- oder Kühlmäntel oder Heiz- bzw. Kühlschlangen bewirkt werden. Diese Gefäße und sonstige verwendete Vorrichtungen sind kommerziell bekannt und werden hier nicht im Detail beschrieben. Darüber hinaus ist das Verfahren nicht auf die Durchführung in einer speziellen Anlage beschränkt und kann mittels eines breiten Spektrums verschiedener Anlagen durchgeführt werden, die zum Durchführen der beschriebenen Verfahrensschritte geeignet sind.

Obwohl weiter oben ein erstes bis viertes Gefäß beschrieben sind, können weitere Gefäße zur Kontrolle des Verfahrens eingesetzt werden. So können beispielsweise das zweite und dritte Gefäß durch je zwei Gefäße bei gleichen oder nur geringfügig unterschiedlichen Bedingungen ersetzt werden, wodurch die Gesamtzahl der Gefäße auf sechs ansteigt. Vorteilhaft für eine gute Kontrolle der Reaktionsbedingungen sind kleine Gefäßvolumina, beispielsweise im Bereich vom 10 bis 60 Liter, insbesondere 20 bis 50 Liter. Vorteilhaft ist hier die durch das geringe Volumen deutlich verbesserte Temperaturkontrolle der stark exothermen Reaktion im Reaktor. Dadurch können die Reaktionen isotherm gefahren und starke Übertemperaturen wie bei größeren Batchreaktoren üblich vermieden werden. Das vergleichsweise geringe Volumen und damit der vermeintlich geringere Materialdurchsatz im Vergleich zu Batchreaktoren kann durch die Möglichkeit des kontinuierlichen Betriebs ausgeglichen werden. Da die Verweilzeit bei konstantem Zufluss von Reaktionsgemisch durch kleine Gefäßvolumina ansteigt und durch große Gefäßvolumina abnimmt, lässt sich auch durch die Wahl der Gefäßvolumina die Verweilzeit variieren. Wenn beispielsweise in einer Kaskade von Gefäßen gleichen Volumens ein Gefäß mit einem anderen Volumen eingesetzt wird, so unterscheidet sich die Verweilzeit in diesem Gefäß zwangsläufig von den übrigen Verweilzeiten, wenn nicht durch geeignete Maßnahmen gegengesteuert wird.

Während der Reaktion kann zu einem oder mehreren der Gefäße frischer Ventilmetall-Precursor, Reduktionsmittel oder Dotiermittel entweder alleine oder im Gemisch mit Verdünnungsmittel zugegeben werden.

In einer weiteren Ausführungsform umfasst das Verfahren darüber hinaus die zusätzliche Zugabe von Ventilmetall-Precursor, Verdünnungsmittel oder einer Mischung daraus zu dem zweiten Gefäß oder zu dem dritten Gefäß oder zu beiden.

In einer weiteren Ausführungsform umfasst das Verfahren die zusätzliche Zugabe eines Reduktionsmittels, eines Verdünnungsmittels oder einer Mischung daraus zu dem zweiten Gefäß oder zu dem dritten Gefäß oder zu beiden.

In einer weiteren Ausführungsform umfasst das Verfahren die zusätzliche Zugabe eines Dotiermittels zu einem oder mehreren der verwendeten Gefäße, insbesondere mindestens zu dem ersten und/oder zweiten und/oder dritten Gefäß zugegeben. Meist ist eine Zugabe zum ersten Gefäß ausreichend. Durch Zugabe des Dotierungsmittels kann das Kornwachstum gezielt initiiert werden, wobei je nach Beschaffenheit des gewünschten Produktes eine Zugabe zu einem oder mehreren der Gefäße vorteilhaft sein kann.

Das Dotiermittel kann im ersten Gefäß mit eingearbeitet werden. Im letzten Gefäß der Reaktorkaskade erfolgt vorteilhaft keine Zugabe von Dotier- oder Reduktionsmittel mehr und es wird lediglich zur Vervollständigung der Reaktion nachgerührt.

In der Regel ist es jedoch ausreichend, wenn Reduktionsmittel mindestens im zweiten Gefäß zugegeben wird. Die Zugabe des Reaktionsmittels kann kontinuierlich oder portionsweise erfolgen und je nach gewünschter Reaktionstemperatur erfolgen. Meist erlaubt die portionsweise Zugabe eine verbesserte Kontrolle der Temperatur, da die Reaktion stark exotherm ist. Die Menge des zugegebenen Reduktionsmittels - unabhängig davon ob eine kontinuierliche oder portionsweise Zugabe erfolgt- wird durch die Grenzen der Wärmeabfuhr festgelegt. Bei zu rascher Zugabe kann die Temperatur des Gemisches sich so stark erhöhen, dass das Reduktionsmittel verdampft, was zu vermeiden ist. Die Temperaturen in den Gefäßen liegen im Allgemeinen bei 800 bis 1050°C, insbesondere bei 850 bis 1050°C oder bei 870 bis 930 °C. Die Temperaturen in Gefäßen, in denen keine Zugabe von Reduktionsmittel erfolgt, liegen in der Regel niedriger bei 800 bis 900 °C.

Das Verfahren findet unter Intergasatmosphäre statt. Dabei sind insbesondere Edelgase, wie Helium, Neon oder Argon, besonders geeignet. Es lassen sich jedoch auch andere Gase einsetzen, die nicht mit den Edukten oder Produkten des Verfahrens reagieren. Stickstoff ist einerseits zwar weniger bevorzugt, kann aber verwendet werden, wenn die Ausbildung einer Nitridphase oder die Anwesenheit von Stickstoff in Form einer festen Lösung in dem Ventilmetall erwünscht ist. In letzterem Fall wird der Stickstoff vorzugsweise durch ein Zuleitungsrohr direkt in das Reaktionsgemisch eingeleitet, so dass das Gas das Reaktionsgemisch soweit sättigen kann wie erforderlich und der Stickstoff von dem Reaktionsprodukt wie gewünscht aufgenommen wird. In diesem Fall wird etwa die drei- bis zwanzigfache Menge des Stickstoffs eingeleitet, der der im Ventilmetall (insbesondere Tantal oder Niob) gewünschten Menge entspricht. Beim Einsatz eines größeren Überschusses an Stickstoff entstehen kristalline Nitridphasen, die meist nicht gewünscht sind. Diese Verfahrensvariante ist bei der Herstellung von Niob oder Tantal für Kondensatoranwendungen vorteilhaft, insbesondere bei Niob.

Das Gemisch wird aus dem letzten Behälter vorzugsweise kontinuierlich entnommen und wie bekannt aufgearbeitet. Dabei wird das Gemisch unter Inertgas, meist Stickstoff oder Argon abgelassen und abgekühlt, wobei eine Temperatur von 100°C oder weniger als geeignet angesehen wird. Das Gemisch wird dann mit Luft oder Dampf passiviert, wobei Reste des Reduktionsmittels zersetzt werden und anschließend zerkleinert. Anschließend wird mit Wasser oder einer Säure ausgelaugt und gewaschen, um Reste von Verdünnungsmittel, Dotiermittel und Reduktionsmittel zu entfernen und das erhaltene Ventilmetallpulver getrocknet.

Auch eine anschließende Hochtemperaturbehandlung ist möglich, um die Sinterbrücken zwischen den Primärkörnern zu stabilisieren, zu verdicken und zu homogenisieren oder eine Vergröberung zu bewirken.

Anschließend kann das Ventilmetallpulver einer Desoxidation mit Magnesium oder einem anderen Reduktionsmittel wie Calcium, Barium, Cer oder Lanthan unterworfen werden. Hierzu wird das Ventilmetallpulver mit Calcium, Barium, Cer oder Lanthan intensiv vermischt und in einer Inertgasatmosphäre, insbesondere Argon, auf eine Temperatur oberhalb der Schmelztemperatur des Reduktionsmittels erhitzt.

Das Verfahren gemäß der Erfindung ist insbesondere zur Herstellung von Niob- und Tantalmetallpulvern geeignet. Die Ventilmetallpulver sind für Kondensatoranwendungen gut geeignet, ebenso wie für die Verwendung bzw. Verarbeiten durch Kaltgasspritzen.

Ventilmetalle gemäß der Erfindung sind Metalle der Gruppen IVB, Vb und Vlb des Periodensystems der Elemente, oder Ti, Zr, Hf, V, Nb, Ta, Cr, Mo, W sowie deren Legierungen, oder Tantal oder Niob.

Ein Reduktionsmittel sind alle Stoffe, die unter den Reaktionsbedingungen des Verfahrens gemäß der Erfindung eine Reduktion des Ventilmetall-Precursors zum elementaren Ventilmetall bewirken können. Dies sind im Allgemeinen Alkali- oder Erdalkalimetalle und deren Legierungen, namentlich Lithium, Natrium, Kalium, Rubidium, Cäsium, Beryllium, Magnesium, Calcium, Strontium und Barium; oder Alkalimetalle und deren Legierungen; oder Natrium, Kalium, Calcium sowie deren Legierungen; oder das Reduktionsmittel enthält Lanthan, Yttrium oder Cer; oder das >Reduktionsmittel ist ein als Mischmetall bezeichnetes, nicht aufgereinigtes Gemisch aus diversen Seltenredmetallen; oder das Reduktionsmittel enthält mindestens ein Alkalimetall; oder Natrium oder Kalium; oder das Reduktionsmittel ist Natrium.

Ein Ventilmetall-Precursor ist ein Stoff, der unter dem Einfluß des Reduktionsmittels zu dem gewünschten Ventilmetall umgesetzt werden kann. Dies sind daher Ventilmetallverbindungen, wie Ventilmetallchloride, beispielsweise Niobpentachlorid, Tantalpentachlorid, Niobsubchlorid, Tantalsubchlorid sowie die entsprechenden Iodide oder Bromide; insbesondere die komplexen Halogenide der Ventilmetalle, insbesondere Alkali-Halogenometallate der Ventilmetalle wie Natrium- oder Kaliumheptafluorotantalat oder Natrium- oder Kaliumheptafluoroniobat oder Natrium- oder Kaliumheptachlorotantalat oder Natrium- oder Kaliumheptachloroniobat, Oxide und Hydride von Tantal und Niob wie Tantalhydrid, Niobhydrid, Tantalpentoxid, Niobpentoxid, Tantaldioxid, Niobdioxid, Niobmonoxid, Tantalmonoxid, oder Mischungen enthaltend die vorgenannten Ventilmetall-Precursor.

Verdünnungsmittel sind Stoffe, die als Reaktionsmedium dienen, jedoch nicht selbst an der Reaktion beteiligt sind und bei den Reaktionsbedingungen flüssig sind. Dies sind meist Alkali- oder Erdalkalisalze, insbesondere Alkali- und/oder Erdalkalihalogenide, namentlich Lithiumchlorid, Lithiumbromid, Lithiumfluorid, Lithiumiodid, Natriumchlorid, Natriumbromid, Natriumfluorid, Natriumiodid, Kaliumchlorid, Kaliumbromid, Kaliumfluorid, Kaliumiodid, Kaliumchlorid, Magnesiumchlorid, Magnesiumbromid, Magnesiumfluorid, Magnesiumiodid, Calciumchlorid, Calciumbromid, Calciumfluorid, Calciumiodid oder deren Mischungen; oder Natriumchlorid, Natriumbromid, Natriumfluorid, Kaliumchlorid, Kaliumbromid, Kaliumfluorid, oder Natriumchlorid, Kaliumchlorid, Kaliumfluorid oder jeweils Mischungen der vorgenannten Salze.

Dotiermittel sind Alkalisalze mit schwefelhaltigen Anionen, Nitride, elementarer Schwefel, Alkalimetallphosphate, Alkalimetallborate oder Borverbindungen, insbesondere Alkalimetallsulfide, -sulfite und -sulfate, Ammoniumsalze, Nitrate, Nitrite, Ammoniumsulfid, Ammoniumsulfit, Ammoniumsulfat, Ammoniumnitrat, Ammoniumnitrit oder Natriumsulfid, Natriumsulfit, Natriumsulfat, Natriumnitrat, Natriumnitrit, Kaliumsulfid, Kaliumsulfit, Kaliumsulfat, Kaliumnitrat, Kaliumnitrit, Natriumphosphat, Kaliumphosphat, Kaliumborat, Natriumborat, Natriumborfluorid, Kaliumborfluorid, Bornitrid oder deren Mischungen; oder Natriumsulfat, Kaliumsulfat oder deren Mischungen.

Eine weitere Ausgestaltung umfasst ein Verfahren zur Herstellung eines Ventilmetalles, umfassend.

- das Schmelzen eines Gemisches, das einen Ventilmetall-Precursor und Verdünnungsmittel enthält, in einem ersten Gefäß;
- das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird;
- das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen;
- das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

Eine weitere Ausgestaltung umfasst ein Verfahren zur Herstellung eines Ventilmetalls, umfassend

- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen, wobei ein drittes Gemisch erhalten wird;
- das Übertragen des dritten Gemisches in mindestens ein viertes Gefäß und Mischen bei einer Temperatur und einer vierten Verweilzeit, um die weitere Reaktion des Ventilmetall-Precursors zu einem Ventilmetall fortzusetzen.

Eine weitere Ausgestaltung der Erfindung umfasst ein Verfahren zur Herstellung eines Ventilmetalls, umfassend

- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen, wobei ein drittes Gemisch erhalten wird;

- das Übertragen des dritten Gemisches in mindestens ein viertes Gefäß und Mischen bei einer Temperatur und einer vierten Verweilzeit, um die weitere Reaktion des Ventilmetall-Precursors zu einem Ventilmetall fortzusetzen, wobei dem zweiten und dritten Gefäß Reduktionsmittel zugesetzt wird.

Eine weitere Ausgestaltung umfasst ein Verfahren zur Herstellung eines Ventilmetalls, umfassend

- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es bei einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen, wobei ein drittes Gemisch erhalten wird;
- das Übertragen des dritten Gemisches in mindestens ein viertes Gefäß und Mischen bei einer vierten Temperatur und einer vierten Verweilzeit, um die weitere Reaktion des Ventilmetall-Precursors zu einem Ventilmetall fortzusetzen, wobei dem ersten Gefäß Dotiermittel und dem zweiten und dritten Gefäß Reduktionsmittel zugesetzt wird.

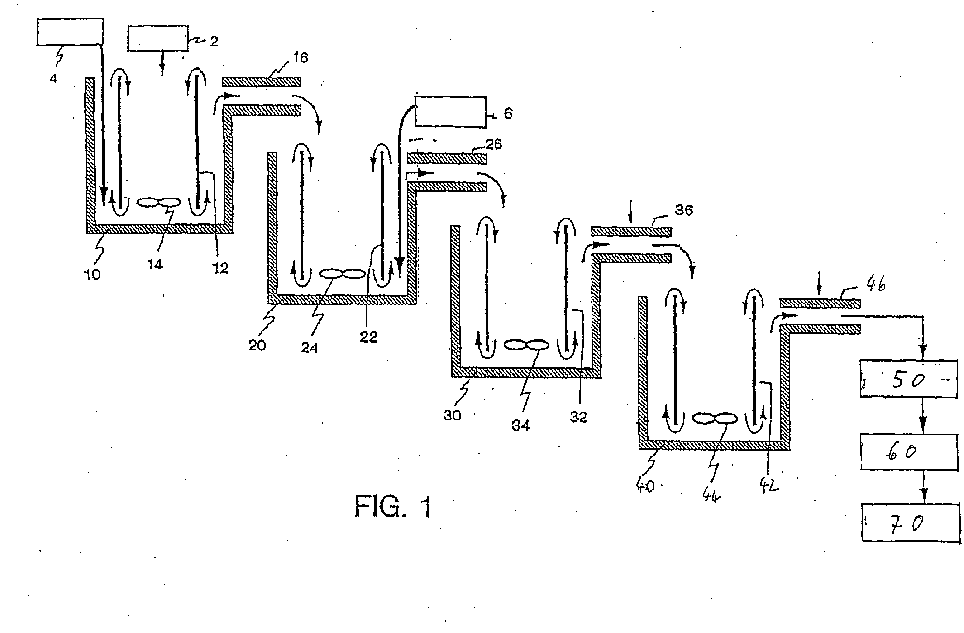

Figur 1 illustriert schematisch ein Reaktorsystem zur Durchführung des Verfahrens zur Herstellung Ventilmetallpulver gemäß der Erfindung. Auch wenn in diesem Schema die Gefäße offen erscheinen, so soll hier auf die erforderliche Ausführung des Verfahrens unter einer Inertgasatmosphäre hingewiesen werden. In Figur 1 ist das Schema eines Kaskadenreaktorsystems gezeigt, in welchem das Verfahren vorteilhaft durchgeführt werden kann und welches eine Reihe von Reaktionsgefäßen mit Absaugrohren und Zirkulationsvorrichtungen (Rührvorrichtungen) umfasst. Derartige Reaktionsgefäße, Absaugrohre und Zirkulationsvorrichtungen, die zur Verwendung in dem Verfahren gemäß der Erfindung geeignet sind, sind kommerziell bekannt und werden daher hier nicht im Detail beschrieben. Das Verfahren ist nicht auf die Ausführung in einer bestimmten Anlage beschränkt und kann mittels eines breiten Spektrums verschiedener Anlagen durchgeführt werden.

In einem vorteilhaften Verfahren wird ein Ventilmetall-Precursor 2 oben in der Mitte des ersten Reaktionsgefäßes 10 zugegeben. Vorteilhaft wird zur selben Zeit das Verdünnungsmittel 4 zugegeben. In einer besonders vorteilhaften Ausführung werden Verdünnungsmittel und Ventilmetall-Precursor zunächst gemeinsam gemischt und das Gemisch zugegeben.

Die Zugabe von Ventilmetall-Precursor 2 und Verdünnungsmittel 4 findet außerhalb des durch das Absaugrohr oder Strombrecher 12 definierten Bereiches statt. Die Geschwindigkeit der Zugabe hängt ab von der gewünschten Verweilzeit für die in dem Gefäß stattfindenden Reaktionen, der Größe des ersten Reaktionsgefäßes und von der Geschwindigkeit, bei der das erste Gemisch aus dem Gefäß überführt wird. Darüber hinaus hängt die Geschwindigkeit der Zugabe zum Teil von der gewünschten Partikelgröße des Endproduktes ab, die Primärkorngröße beträgt meist 0,1-1$\mu$m, die Agglomeratkorngröße 30-300 $\mu$m. Das erste Reaktionsgefäß 10 wird bei einer ersten Temperatur (T1) gehalten, die zum Teil durch die verwendeten Edukte, zum Teil durch die gewünschte Partikelgröße des Endproduktes bestimmt wird. Im Allgemeinen liegt T1 im Bereich von 800 bis 1050°C, insbesondere bei 850 bis 1050°C oder bei 800 bis 900 °C oder 870 bis 930°C. Wärmeübertragungsmittel (z.B. ein Heizmantel, der das Gefäß umgibt oder Heizschlangen oder -platten, die in Fig. 1, nicht gezeigt sind) können verwendet werden, um die Reaktionsgefäße 10, 20, 30 und 40 bei den gewünschten Temperaturen zu halten. Die Zirkulationsvorrichtung 14, beispielsweise ein Rührer oder eine Pumpe, wird dazu verwendet, den Ventilmetall-Precursor 2 und das Verdünnungsmittel 4 innerhalb des Reaktionsgefäßes umzuwälzen und zu mischen, um ein erstes Gemisch zu erhalten. Die Fließrichtung des ersten Gemisches in dem ersten Reaktionsgefäß kann wie durch Pfeile angegeben verlaufen.

Während der Umwälzung tritt ein Teil des ersten Gemisches des ersten Reaktionsgefäßes 10 durch die Leitung 16. Die Verweilzeit für die Reaktion, die in dem ersten Reaktionsgefäß stattfindet, R1, kann durch Variieren der Durchsatzrate und/oder der Reaktorgröße und/oder durch die Verwendung eines absenkbaren Verdrängungskörpers in den jeweiligen Gefäßen die Verweilzeit kontrolliert werden. Durch die Verwendung eines absenkbaren Verdrängungskörpers in den jeweiligen Gefäßen kann das Gemisch auch schubweise in den nächsten Kessel überführt werden. Die Verweilzeit bestimmt zum Teil die Größe, Dichte, Oberfläche und die Schüttdichte der Partikel. Für bestimmte Reaktorgrößen kann R1 im Bereich von 20 bis 120 Minuten, meist jedoch im Bereich von 5 bis 30 Minuten liegen. Für eine gegebene Verweilzeit R1 und eine gegebene Temperatur T1 führen höhere Werte für R1 zu einem Endprodukt, dessen Primärpulver eine um 1-4 g/inch$^3$ höhere Schüttdichte im Bereich von 12-20 g/inch$^3$ aufweist.

Der Teil des ersten Gemisches, der das erste Reaktionsgefäß 10 durch die Leitung 16 verlässt, wird in die innere Peripherie eines zweiten Reaktionsgefäßes 20 in den Bereich eingeführt, der durch das Absaugrohr 22 definiert ist. Die Zugabegeschwindigkeit des ersten Gemisches in das zweite Reaktorgefäß 20 hängt ab von der Geschwindigkeit, mit der das erste Gemisch von dem ersten Reaktionsgefäß 10 übertragen wird. Das Reduktionsmittel 6 wird an der äußeren Peripherie und nahe dem Boden des zweiten Reaktionsgefäßes 20 außerhalb des durch das Saugrohr 22 definierten Bereichs zugegeben. Die Zugabegeschwindigkeit des Reduktionsmittels 6 hängt ab von der Größe des zweiten Reaktionsgefäßes, der gewünschten Verweilzeit für die in dem zweiten Reaktionsgefäß stattfindenden Reaktionen und der Geschwindigkeit, bei der das erste Gemisch in das zweite Reaktionsgefäß überführt wird. Darüber hinaus hängt die Additionsgeschwindigkeit des Reduktionsmittels 6 auch von der gewünschten Temperatur T2 des zweiten Gemischs ab, die zum Teil die gewünschte Partikelgröße des Endprodukts bestimmt. Im Allgemeinen liegt T2 im Bereich von 800 bis 1050°C, insbesondere bei 850 bis 1050°C oder bei 870 bis 930 °C.

Das zweite Reaktionsgefäß 20 wird bei einer zweiten Temperatur T2 gehalten, die zum Teil bestimmt wird durch die gewünschte Dichte der Partikel in dem Endprodukt, die gewünschte Größe der Partikel in dem Endprodukt und die Reaktionsgeschwindigkeit. Im Allgemeinen liegt T2 in einem Bereich von 800°C bis 1050°C, jedoch immer so niedrig, dass das Reduktionsmittel nicht in nennenswertem Umfang verdampft. Für eine gegebene Temperatur und eine Verweilzeit führt ein höherer Wert für T2 zu einem Endprodukt mit einer erhöhten, gröberen Partikelgröße. Die Umwälzvorrichtung 24 wird verwendet, um das Gemisch, das in das zweite Reaktionsgefäß eintritt und das Reduktionsmittel 6 in dem Reaktionsgefäß 10 umzuwälzen und zu mischen, wobei ein zweites Gemisch gebildet wird. Die Fließrichtung des zweiten Gemischs in dem zweiten Reaktionsgefäß ist durch die Pfeile angegeben. Eine Umkehr der Fließrichtung kann je nach den gewünschten Produkten Partikeleigenschaften beeinflussen.

Während der Umwälzung tritt ein Teil des zweiten Gemischs durch die Leitung 26 aus dem zweiten Reaktionsgefäß aus. Die Verweilzeit R2 für die in dem zweiten Reaktionsgefäß stattfindende Reaktion, kann durch Variieren der Umwälzgeschwindigkeit und/oder der Reaktorgröße und/oder durch die Verwendung eines absenkbaren Verdrängungskörpers kontrolliert werden und bestimmt zum Teil die Vervollständigung der Reaktion in dem zweiten Gefäß. Die Verweilzeit bestimmt zum Teil die Größe, Dichte, Oberfläche und die Schüttdichte der Partikel. Bis zu einem gewissen Grad erlaubt sie ein Ausfällen und Verdichten der aus dem Reaktionsprodukt, dem gewünschten Refraktärmetall, bestehenden Partikel. Durch Variieren von R2 können somit Produkte verschiedener Partikelgrößen, Dichten, Oberflächen und die Schüttdichten der Partikel erzeugt werden R2 kann im Bereich von 2 bis 90 Minuten liegen. Für eine gegebene T2 ergibt ein höherer Wert für R2 ein Endprodukt, das dichtere und gröbere Partikel aufweist.

Der Teil des zweiten Gemischs, der aus dem zweiten Reaktionsgefäß 20 durch die Leitung 26 austritt, wird in die innere Peripherie eines dritten Reaktionsgefäßes 30 innerhalb des durch das Absaugrohr 32 definierten Bereiches eingeleitet. Die Zugabegeschwindigkeit des zweiten Gemischs in das dritte Reaktionsgefäß 30 hängt ab von der Geschwindigkeit, bei der das zweite Gemisch aus dem zweiten Reaktionsgefäß 20 überführt wird.

Die Umwälzvorrichtung 34 wird dazu verwendet, das zweite Gemisch in dem dritten Reaktionsgefäß umzuwälzen und weiterhin zu mischen, um eine im Wesentlichen vollständige Ausfällung des Refraktärmetalles zu ermöglichen. Die Fließrichtung des zweiten Gemischs in dem dritten Reaktionsgefäß ist durch die Pfeile angegeben, ist jedoch keine begrenzende Eigenschaft der Reaktion. In Fällen, in denen kein zusätzliches Reduktionsmittel, Verdünnungsmittel, Ventilmetall-Precursor oder Dotiermittel zu dem dritten Reaktionsgefäß zugegeben wird, ist die Temperatur des Gemischs in dem dritten Reaktionsgefäß, T3, im Allgemeinen geringfügig kleiner als T2, je nach dem Grad der Vollständigkeit der Reaktion in dem dritten Reaktionsgefäß, sowie der Zugabegeschwindigkeit des zweiten Gemischs in das dritte Reaktionsgefäß 30.

Das dritte Reaktionsgefäß 30 wird bei einer Temperatur T3 gehalten, die zum Teil durch den Grad der gewünschten Vervollständigung der Reaktion in dem Gefäß bestimmt wird. Im Allgemeinen liegt T3 in einem Bereich von 800 bis 1050°C, oder bei 850 bis 1050°C oder 870 bis 930 °C, insbesondere bei 880 bis 920 °C; wird im dritten Reaktionsgefäß kein zusätzliches Reduktionsmittel zugegeben liegt T3 insbesondere bei 800 bis 900 °C. Für eine gegebene Verweilzeit führt ein höherer Wert für T3 zu einer im Wesentlichen vollständigen Endproduktereaktion.

Während der Umwälzung tritt ein Teil des Gemischs durch eine Ausgangsleitung 36 aus dem dritten Reaktionsgefäß aus. Die Verweilzeit für die Reaktionen, die in dem dritten Reaktionsgefäß stattfinden, können durch Variieren der Umwälzgeschwindigkeit und der Größe des Reaktionsgefäßes kontrolliert werden. Die Verweilzeit des Gemisches in dem dritten Reaktionsgefäß, R3, bestimmt zum Teil die Vervollständigung der Reaktion zum Endprodukt. R3 kann im Bereich von 20 bis 120 Minuten, insbesondere 5 bis 30 Minuten liegen. Für eine gegebene Temperatur T3 führen höhere Werte für R3 zu einem Endprodukt, das dichtere, gröbere Partikel aufweist.

Während der Umwälzung tritt ein Teil des dritten Gemischs durch die Leitung 36 aus dem zweiten Reaktionsgefäß aus.

Der Teil des dritten Gemischs, der aus dem dritten Reaktionsgefäß 30 durch die Leitung 36 austritt, wird in die innere Peripherie eines vierten Reaktionsgefäßes 40 innerhalb des durch das Absaugrohr 42 definierten Bereiches eingeleitet. Die Zugabegeschwindigkeit des dritten Gemischs in das vierte Reaktionsgefäß 40 hängt ab von der Geschwindigkeit, bei der das dritte Gemisch aus dem dritten Reaktionsgefäß 30 überführt wird:

Die Umwälzvorrichtung 44 wird dazu verwendet, das dritte Gemisch in dem vierten Reaktionsgefäß umzuwälzen und weiterhin zu mischen, um eine Vervollständigung der Ausfällung des Refraktärmetalles zu ermöglichen. Die Fließrichtung des dritten Gemischs in dem vierten Reaktionsgefäß ist durch die Pfeile angegeben, ist jedoch keine begrenzende Eigenschaft der Reaktion. Es wird hierbei in der Regel kein zusätzliches Reduktionsmittel, Verdünnungsmittel, Ventilmetall-Precursor oder

Dotiermittel zu dem vierten Reaktionsgefäß zugegeben. Die Temperatur des Gemischs in dem vierten Reaktionsgefäß, T4, ist im Allgemeinen geringfügig kleiner als T3, je nach dem Grad der Vollständigkeit der Reaktion in dem vierten Reaktionsgefäß, sowie der Zugabegeschwindigkeit des dritten Gemischs in das vierte Reaktionsgefäß 40.

Das vierte Reaktionsgefäß 40 wird bei einer Temperatur T4 gehalten, die zum Teil durch den Grad der Vervollständigung der Reaktion in dem vorhergehenden Gefäß bestimmt wird. Im Allgemeinen liegt T4 in einem Bereich von 800 bis 1050°C, oder bei 850 bis 1050°C oder insbesondere bei 800 bis 900 °C.

Während der Umwälzung tritt ein Teil des Gemischs durch eine Ausgangsleitung 46 aus dem vierten Reaktionsgefäß aus. Die Verweilzeit für die Reaktionen, die in dem vierten Reaktionsgefäß stattfinden, können durch Variieren der Umwälzgeschwindigkeit und der Größe des Reaktionsgefäßes kontrolliert werden. Die Verweilzeit des Gemisches in dem vierten Reaktionsgefäß, R4, bestimmt zum Teil die Vervollständigung der Reaktion zum Endprodukt. R4 kann im Bereich von 20 bis 120 Minuten, insbesondere 5 bis 30 Minuten liegen. Für eine gegebene Temperatur T4 führen höhere Werte für R3 zu einem Endprodukt, das dichtere, gröbere Partikel aufweist.

Die Lösung, die durch die Austrittsleitung 46 aus dem vierten Reaktionsgefäß 40 austritt, läuft zu einer herkömmlichen Verarbeitungsanlage, in der das Gemisch in einem Schritt 50 auf eine Temperatur von weniger als 100°C abgekühlt wird, wobei sich das Gemisch verfestigt, und durch kontrollierte Luftzugabe passiviert wird. Dabei kann die Luft mit Wasserdampf angereichert oder durch Wasserdampf ersetzt werden. Anschließend wird das erstarte, passivierte Gemisch in Schritt 50 zerkleinert. Das ausgefallene, feste Ventilmetall wird aus dem Gemisch durch einen Schritt 60 abgetrennt, in dem die wasserlöslichen Anteile in demineralisiertem Wasser gelöst wird, welches eine Säure enthalten kann, allfällige Reste des Reduktionsmittels in einer sauren Lösung, beispielsweise durch wasserstoffperoxidhaltige Schwefelsäure, aufgelöst werden und nach dem Waschen das Ventilmetall durch einen Flüssigkeit/Feststoff-Abtrennschritt gewonnen werden. Der Flüssigkeit/Feststoff-Abtrennschritt kann auf jede in der Technik bekannte Art durchgeführt werden, beispielsweise durch Filtrieren oder Zentrifugieren. Vorzugsweise wird der Flüssigkeit/Feststoff-Abtrennschritt durch ein Vakuum- oder Druckfilter durchgeführt.

Nach dem Waschen werden die Feststoffe getrocknet, wie durch den Trocknungsschritt 70 angegeben ist. Das erhaltene Produkt ist ein Ventilmetallpulver, das eine enge Partikelgrößenverteilung, eine gewünschte Partikelgröße sowie eine gewünschte Sphärizität aufweist. Optional kann der Verfahrensschritt 70 auch eine Phosphordotierung beinhalten. Dabei wird der Phosphorgehalt des Ventilmetall-Pulvers eingestellt, indem das Ventilmetall beispielsweise mit einer Ammoniumhydrogenphosphatlösung ($(NH_4)H_2PO_4$-Lösung) behandelt und anschließend getrocknet wird. Das so erhaltene Ventilmetall kann dann weiteren Verfahrensschritten unterworfen werden.

Beispielsweise kann eine Hochtemperaturbehandlung, ein Desoxidationsschritt oder eine Kombination daraus angeschlossen werden.

Obwohl die Zugabe von Materialien und Reagenzien unter Bezugnahme auf besondere Teile der Reaktionsgefäße beschrieben worden ist, können die Materialien und Reagenzien zu alternativen Teilen der Reaktionsgefäße zugegeben werden, um Endprodukte mit verschiedenen Eigenschaften zu erzeugen. Beispielsweise kann in dem ersten Reaktionsgefäß der Ventilmetall-Precursor 2 zu der äußeren Periphere des Gefäßes zugegeben werden und das Verdünnungsmittel 4 in der Mitte des Gefäßes zugegeben werden; oder aber Ventilmetall-Precursor und Verdünnungsmittel werden außerhalb des ersten Gefäßes gemischt und dann zugefügt; oder es wird zusätzlich zum Ventilmetall-Precursor 2 und dem Verdünnungsmittel 4 ein Dotiermittel zugegeben; oder aber Ventilmetall-Precursor und Verdünnungsmittel und Dotiermittel werden außerhalb des ersten Gefäßes gemischt und dann zugefügt. Es ist darüber hinaus offensichtlich, dass obwohl bei der vorherigen Ausführungsform 4 Reaktionsgefäße verwendet werden, das erfindungsgemäße Verfahren mit einer geringeren oder größeren Anzahl von Reaktionsgefäßen durchgeführt werden kann, je nach den gewünschten Eigenschaften des Endprodukts und der gewünschten Prozessführung.

Die vorliegende Erfindung betrifft außerdem Pulver mit gleichförmiger Primärkorn- und Agglomeratkorngröße sowie einem Magnesiumgehalt von weniger als 20 ppm, insbesondere weniger als 10 ppm, oder von 0 bis 20 ppm, oder von 0 bis 10 ppm, insbesondere von 0 bis 1 ppm.

Das Pulver weist Primärkorngrößen d zwischen 0,1-2 $\mu$m mit einer Halbwertsbreite vom 0,3-fachen des Mittelwertes, bevorzugt mit 0,1-fachen des Mittelwertes auf.

Die mittlere Agglomeratkorngröße mit einem D50-Wert, bestimmt mittels MasterSizer nach ASTM B 822 von 40-200 $\mu$m, bevorzugt von 60-120 $\mu$m, wobei das Ventilmetallpulver frei durch einen Hall-Flow Trichter (ASTM B 212 bzw. B 417) mit einem Durchmesser der Trichteröffnung von 2/10 inch, bevorzugt 1/10 inch fließt. Die Ventilmetallpulver gemäß der Erfindung weisen eine enge Korngrößenverteilung und einen Formfaktor von nahezu 1 auf.

Der D90-Wert, bestimmt mittels MasterSizer nach ASTM B 822, entspricht vorzugsweise maximal dem 1,5-fachen D50-Wert, bestimmt mittels MasterSizer nach ASTM B 822, besonders bevorzugt maximal dem 1,3-fachen D50-Wert. Das Verhältnis von D/d ist > 100.

Auf Grund der gleichförmigen, kontrollierten Reaktionsbedingungen liegen die Verunreinigungen mit Natrium oder Kalium (Alkaligehalt insgesamt) bei weniger als 20 ppm, insbesondere weniger als 10 ppm, oder von 0 bis 20 ppm, oder von 0 bis 10 ppm, oder von 0 bis 5 ppm insbesondere von 0 bis 1 ppm.

Das Ventilmetallpulver besteht aus Agglomeraten, deren durchschnittliche Korngröße nicht mehr als 2,0 $\mu$m (FSSS), bevorzugt nicht mehr als 1,7 $\mu$m (FSSS), insbesondere 0,35 $\mu$m bis 1 $\mu$m beträgt und die Agglomerate aus primären Einzelkörnern (Primärpartikelgröße) bestehen, deren durchschnittliche Korngröße nicht mehr als 0,7 $\mu$m (FSSS), insbesondere 100 bis 400 nm, bestimmt durch REM-Aufnahmen, beträgt.

Die Ventilmetallpulver besitzen nach Sinterung bei 1100 bis 1300 °C für 10 Minuten und anschließender Formierung bei einer Spannung von 16 bis 30 Volt eine spezifische Kapazität von 80.000 bis 300.000 $\mu$FV/g, oder eine Kapazität von 120.000 bis 240.000 $\mu$FV/g, insbesondere eine Kapazität von 140.000 bis 200.000 $\mu$FV/g, der Leckstrom unter diesen Bedingungen beträgt weniger als 1,6 nA/$\mu$FV.

Das Ventilmetallpulver gemäß der Erfindung besitzt eine spezifische Oberfläche nach BET von 1,5 bis 20 m$^2$/g, oder 5 bis 15 m$^2$/g, oder 6,3 bis 13,7 m$^2$/g, insbesondere 9,6 bis 12,7 m$^2$/g. (3-4-5m$^2$)

Die Pulver können auch mit Stickstoff dotiert sein und 100 ppm bis 20.000 ppm, oder 300 ppm bis 3000 ppm, oder 3000 bis 8000 ppm, insbesondere 3200 bis 6100 ppm Stickstoff enthalten. Liegt der Stickstoffgehalt oberhalb 3000 ppm, so liegt der Stickstoff vorzugsweise in Form einer festen Lösung von Stickstoff in dem Ventilmetall vor. Dabei handelt es sich insbesondere um ein Tantal- oder Niobpulver, insbesondere eine Niobpulver.

Die Ventilmetallpulver, insbesondere die Tantal- und Niobpulver, sind geeignet zur Herstellung von Kondensatoren und zur Verarbeitung mittels Kaltgasspritzen. Daher betrifft die vorliegende Erfindung außerdem die Verwendung der Ventilmetallpulver zur Herstellung von Kondensatoren oder zur Verarbeitung nach dem Verfahren des Kaltgasspritzens, einen Kondensator enthaltend ein Ventilmetallpulver gemäß der Erfindung, gesinterte Metallkörper enthaltend ein Ventilmetallpulver gemäß der Erfindung sowie elektrische oder elektronische Vorrichtungen enthaltend einen Kondensator, der ein Ventilmetallpulver gemäß der Erfindung enthält.

Der aus REM-Bildanalysen bestimmte Kornformfaktor f besitzt einen Mittelwert f in den Grenzen von 0,65 </= f </= 1,00 oder 0,70 </= f </= 0,95 oder 0,75 </= f </= 0,90 oder 0,80 </= f </= 0,90 liegt und die dazugehörige Standardabweichung liegt vorzugsweise bei (delta) f </=0,10 ist.

Die Pulver gemäß der Erfindung zeichnen sich somit durch eine große Feinheit bei gleichzeitig enger Korngrößenverteilung und nahezu kugelförmigen Teilchen mit sehr geringen Schwankungen der Kornform aus.

Die Bestimmung des Kornformfaktors kann an REM-Aufnahmen an den entsprechenden Pulver-Körnern mittels Linear- und Kornformanalyse vorgenommen werden. Die Präparation der Pulver ist dabei so vorzunehmen, dass die im REM untersuchte Probe repräsentativ ist, d.h. durch die Präparation keine An- oder Abreicherung von feinen oder groben Pulverteilchen erfolgt.

Die Kornabmessungen können nach dem bekannten Verfahren der Sehnenlängenmessung bestimmt werden. Die für die Kornformcharakterisierung notwendigen Messungen des Kornumfanges U und der Kornfläche A (zweidimensionale Projektion des Kornes auf die Bildfläche) können durch die definierten Kornabmessungen gemäß der unten angegebenen Formeln bestimmt werden.

Die Durchmesser $d_u$ und $d_A$ charakterisieren zwei unterschiedliche, kugelförmige Vergleichsteilchen, deren Projektionen auf die Ebene (a) den gleichen Umfang U und (b) die gleiche Fläche A wie das wirkliche (untersuchte) Teilchen haben.

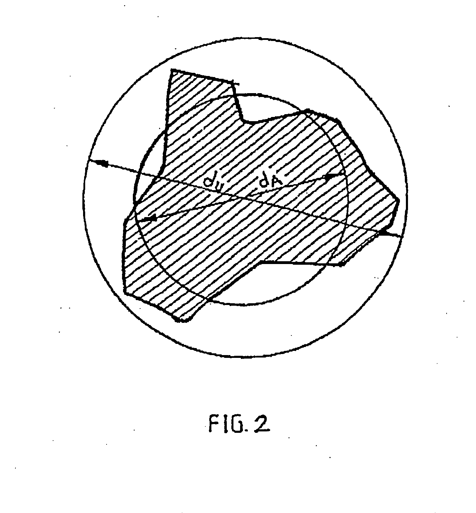

Figur 2 ist die schematische Darstellung zur Erläuterung des Formfaktors f:

du = Durchmesser eines Kreises, dessen Umfang U gleich dem projizierten Teilchenumfang ist
dA = Durchmesser eines Kreises, dessen Fläche gleich der (projizierten) Teilchenfläche ist, wobei gilt: (dA </= du).
Der Formfaktor ist ein Maß für die Sphärizität der Pulverpartikel.

Der Formfaktor ist wie folgt definiert. Es werden zwei Durchmesser $d_U$ und $d_A$ eingeführt und durch

$$d_U = U / \pi$$

$$d_A = \left(4A/\pi\right)^{\frac{1}{2}}$$

definiert.

Der Kornformfaktor f ergibt sich aus der Fläche A und dem Kornumfang U: Dabei ist U der Umfang und A die Fläche der Teilchenprojektion bzw. der Teilchenquerschnittsfläche, siehe Fig. 2. Der Formfaktor f ist durch

$$f = \left(\frac{d_A}{d_U}\right) = \left(\frac{4\pi A}{U^2}\right)$$

definiert. Die Teilchenquerschnittsfläche A und den Umfang dieser Fläche U kann man z. B. über Bildauswertungen von REM-Bildern oder Schliffen messen. Für ein exakt kugelförmiges Teilchen ist f = 1. Für sphärische Teilchen, die fast kugelförmig sind, ist f etwas kleiner, aber fast eins, und für Teichen, die stark von der Kugelform abweichen, ist f deutlich kleiner als eins.

Das erfindungsgemäße Pulver kann dadurch hergestellt werden, daß $K_2TaF_7$ mit Natrium kontinuierlich in einer Rührkesselkaskade, bevorzugt 2-4 stufig, hergestellt wird. Dabei ist in einer bevorzugten Ausführungsform die Rührkesselkaskade ohne Ventile, welche die flüssige Schmelze benetzen ausgeführt. Die Dosierung des $K_2TaF_7$ kann in fester oder flüssiger Form erfolgen. Das Aufschmelzen des $K_2TaF_7$ erfolgt im ersten Reaktor. Bei einer Ausführung der Dosierung in flüssiger Form wird in den ersten Reaktor nur $K_2TaF_7$ und gegebenenfalls Verdünnungssalze wie KCl, KF oder NaCl sowie Dotiermittel wie Natrium- oder Kaliumsulfat gegeben. Durch die Verwendung eines absenkbaren Verdrängungskörpers im ersten Kessel kann die Schmelze auch schubweise in den nächsten Kessel überführt werden. In den weiteren Rührkesseln wird Natrium so dosiert, daß die Reaktion in einem engen Temperaturfenster abläuft. Dabei wird Natrium bevorzugt schußweise dosiert, die Gesamt-Natriummenge beträgt 0.95-1.06-faches stöchiometrisches Verhältnis zum $K_2TaF_7$, die Schußgröße liegt bei 1 kg bis 10 kg, insbesondere bei 2 kg bis 5 kg Natrium. Die Reaktionstemperaturen liegen zwischen 850-1050 °C, bevorzugt bei 880-950 °C oder 880-950 °C. Die während der exothermen Reaktion entstehende Wärme wird über die Wandung abgeführt. Diese wird mit Luft oder über Wärmetauscher gekühlt. In der letzten Kaskade wird die Reaktion zum Abschluß nachgerührt. Die Steuerung der Reaktion kann über Dosiergeschwindigkeit von $K_2TaF_7$, Na, Verdünnungssalz und Dotiermittel erfolgen. Die Exothermie der Reaktion ist durch die relativ geringen Ausmaße der Reaktoren besonders gut beherrschbar, durch die Intensität der Kühlung kann die Verweilzeit auch bei gegebenen festen Reaktormaßen variiert werden. Die mittleren Verweilzeiten liegen zwischen 10 min-4h, bevorzugt zwischen 20-120 min. In einer bevorzugten Ausführungsform wird die Rührkesselkaskade so ausgeführt, daß die einzelnen Kessel über Überläufe fest miteinander verbunden sind. Das Produkt wird kontinuierlich abgezogen. In einer bevorzugten Ausführungsform wird die Schmelze unter Argon in einen konischen Wechselbehälter abgelassen. Anschließend wird das Reaktionsgut auf <100 °C abgekühlt, mit Luft oder Dampf passiviert und über einen Brecher zerkleinert. Die weitere Aufarbeitung des Reaktionsprodukts erfolgt in bekannter Weise. Es wird in Wasser unter Zugabe von Säure ausgelaugt und gewaschen um Verdünnungssalze und Reste NaOH und Dotiermittel zu entfernen und das erhaltene Tantalpulver getrocknet. Wahlweise kann hier ein Schritt der Phosphordotierung eingefügt werden, bei dem das Tantalmetallpulver mit einer $(NH_4)H_2PO_4$-Lösung behandelt wird, um den P-Gehalt im fertigen Tantalmetallpulver einzustellen. Anschließend wird das Pulver einer Hochtemperaturbehandlung im Vakuum ausgesetzt. Beispielsweise wird 30 Minuten auf 1250 °C bis 1500 °C, bevorzugt auf 1280 °C bis 1450 °C, besonders bevorzugt auf 1280 °C bis 1360 °C erhitzt oder 1000 °C, bei Pulvern mit BET-Oberflächen von mehr als 3 $m^2$/g vorteilhaft bei Temperaturen zwischen 1000 bis 1200°C. Das so hergestellte Tantalpulver wird dann einer Desoxidation mit Magnesium oder anderen Reduktionsmitteln (Ca, Ba, Ce, La) unterworfen. Dazu wird das pulverförmige Reduktionsmittel mit dem Ta-Pulver vermischt und bei Temperaturen zwischen 700-1100 °C für 1-10 h unter Schutzgas (Argon) oder Vakuum behandelt, wodurch eine Gasphasendesoxidation des Refraktärmetalls erreicht wird. Auch eine Gasdesoxidation mit gasförmigem Magnesium kann alternativ dazu durchgeführt werden. Anschließend wird das Pulver abgekühlt, mit Luft passiviert und mit verdünnter Säure (Schwefelsäure oder Salpetersäure) gewaschen und anschließend getrocknet.

## Beispiele

Soweit nicht anders angegeben, handelt es sich bei den Prozentangaben um Gewichtsprozent (Gew.-%).

Die Kapazität des Ventilmetallpulvers wird nach folgendem Vorgehen bestimmt: Aus jeweils 0,296 g eines desoxidierten Ventilmetallpulvers werden zylinderförmige Presskörper der Abmessung 4,1 mm Durchmesser und 4,26 mm Länge mit einer Pressdichte von 4,8 g/cm³ hergestellt, wobei in der Pressmatritze vor dem Einfüllen der Ventilmetallpulver axial ein Tantaldraht von 0,2 mm Durchmesser als Kontaktdraht eingelegt wurde. Die Presskörper werden bei einer Sintertemperatur von 1330 °C bis 1430 °C über 10 Minuten im Hochvakuum (< $10^{-5}$ mbar) zu Anoden versintert. Die Anodenkörper werden in 0,1 Gew.-%-ige Phosphorsäure eingetaucht und bei einer auf 150 mA begrenzten Stromstärke bis zu einer Formierspannung von 30 V formiert. Nach Abfallen der Stromstärke wird die Spannung noch 100 Minuten aufrecht erhalten. Zur Messung der Kondensatoreigenschaften wird ein Elektrolyt aus 18 Gew.-%-iger Schwefelsäure eingesetzt. Es wird mit einer Frequenz von 120 Hz gemessen. Anschließend wird der Reststrom in Phosphorsäure der Leitfähigkeit 4300 $\mu$S gemessen. Die erhaltenen Werte der Kapazität der Einzelanode und des Reststroms der Einzelanode werden auf $\mu$FV/g mit $\mu$F = Kapazität, V = Formierspannung, g = Anodenmasse bzw. $\mu$A/g mit pA = gemessener Reststrom und g = eingesetzte Anodenmasse oder $\mu$A/$\mu$FV normiert.

Bei den erfindungsgemäßen Ventilmetallpulvern handelt es sich vorzugsweise um Niob- oder Tantalpulver, wobei diese gegebenenfalls miteinander und/oder mit einem oder mehreren der Metalle Ti, Mo, V, W, Hf und Zr dotiert sind. Weitere Dotierelemente, wie beispielsweise Phosphor, sind möglich.

Die erfindungsgemäßen Ventilmetallpulver können für verschiedenste Anwendungen eingesetzt werden und eignen sich insbesondere zur Herstellung von Festelektrolytkondensatoren.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiel 1 (Vergleichsbeispiel)

Ein Tantal-Primärpulver wurde ausgehend von einer Mischung aus 150 kg $K_2TaF_7$, 136 kg KCl, 150 kg KF, 4 kg eines hochfeinen Tantalpulvers und 300 g $Na_2SO_4$ in einer Nickel beschichteten INCONEL-Retorte durch inkrementweise Zugabe von Natrium bei einer Reduktionstemperatur von 900 °C analog US-A 5 442 978 hergestellt. Das Tantalpulver wurde aus der erkalteten und zerkleinerten Reaktionsmischung durch Waschung mit schwach angesäuertem Wasser isoliert, wobei abschließend noch eine reinigende Behandlung mit einer Waschlösung durchgeführt wurde, die Schwefelsäure und Wasserstoffperoxid enthielt. Das Material wurde mit einer Natriumdihydrogenphosphatlösung, die 1 mg P pro ml Lösung enthält, auf 20 ppm Phosphor dotiert. Nach dem Trocknen wurde eine Temperaturbehandlung im Hochvakuum bei 1430 °C durchgeführt. Im Anschluss daran wurde mittels der Natriumdihydrogenphosphatlösung (1mg P pro ml) der Phosphorgehalt des Tantalpulvers auf 60 ppm eingestellt. Das Pulver weist folgende Verunreinigungen (in ppm) auf:

Mg: < 1 ppm

Na: 0,7 ppm

K: 7 ppm

2 kg des Ausgangspulvers aus Beispiel 1 wurden mit 50 g Magnesiumspänen (2,5 Gew.-%) vermischt und in einem abgedeckten Tantaltiegel in einer Retorte unter Argonatmosphäre für 3 h auf 980 °C gebracht. Nach Abkühlen und kontrollierter Lufteinspeisung zur Passivierung wird das Reaktionsgut entnommen und gebildetes Magnesiumoxid mit einer Waschlösung aus verdünnter Schwefelsäure und Wasserstoffperoxidlösung entfernt. Die Waschlösung wird abdekantiert und das Pulver auf der Nutsche mit entmineralisiertem Wasser säurefrei gewaschen. Das getrocknete Pulver weist einen Sauerstoffgehalt von 2781 ppm auf.

1,8 kg dieses Pulvers werden nun einem zweiten Desoxidationsschritt unterzogen. Dazu werden 11,4 g Magnesiumspänen (bezogen auf den Sauerstoffgehalt die 1,5-fach stöchiometrische Menge) unter das Pulver gemischt und diese Mischung ebenfalls für 3 h auf 980 °C erhitzt. Nach dem Abkühlen und Passivieren wird erneut das gebildete MgO durch eine Säurewäsche entfernt, und das Pulver säurefrei gewaschen.

Das so hergestellte Pulver weist die folgenden Verunreinigungen auf:

Mg: 8 ppm

Na: 1 ppm

K: 6 ppm

Der elektrische Test ergab eine Kapazität von 38261 CV/g bei einer Sintertemperatur von 1400 °C.

B1. Erhaltene Ventilmetallpulver - Vergleichsbeispiele

| Nr. | Ventilmetall | T2 °C | Inertgas | Kap. kCV/ g | BET m²/g | Mg < ppm | Na < ppm | K ppm | N2 ppm | O2 ppm |
|-----|-------------|-------|----------|-------------|----------|----------|----------|-------|--------|--------|
| 1 | Ta | 980 | Ar | 53 | 0,9 | 20 | 3 | 10 | 500 | 3100 |
| 2 | Ta | 980 | Ar | 89 | 2,09 | 25 | 0,5 | 0,5 | 1304 | 6290 |
| 3 | Ta | 980 | Ar | 63 | 1,22 | 25 | 0,5 | 0,5 | 1100 | 5500 |

(fortgesetzt)

| Nr. | Ventilmetall | T2 °C | Inertgas | Kap. kCV/ g | BET m$^2$/g | Mg < ppm | Na < ppm | K ppm | N2 ppm | 02 ppm |
|-----|--------------|-------|----------|-------------|-------------|----------|----------|-------|--------|--------|
| 4 | Ta | 1020 | Ar | 70 | 1,43 | 25 | 1 | 1 | 700 | 3700 |
| 5 | Ta | 930 | Ar | 91 | 2,11 | 25 | 0,5 | 0,5 | 1240 | 6450 |
| 6 | Ta | 950 | Ar | 153 | 3,23 | 30 | 1 | 1 | 1700 | 7858 |
| 7 | Ta | 980 | Ar | 150 | 3,01 | 30 | 1 | 1 | 1300 | 8148 |
| 8 | Ta | 980 | Ar | 200 | 4,45 | 70 | 1 | 1 | 1500 | 11877 |

**Beispiel 2**

Ein Gemisch aus 150 kg Kaliumhexafluorosalz des Ventilmetalles wird mit 150 kg Kaliumchlorid, 150 kg Kaliumfluorid und Kaliumsulfat vermischt und in das erste Reaktionsgefäß kontinuierlich eindosiert. Dort wird das Gemisch auf 900°C erhitzt und nach dem Aufschmelzen in ein zweites Gefäß überführt. Dort wird kontinuierlich die Gesamtmenge von 50 kg Natrium unter Temperaturkontrolle derart zudosiert, dass die Temperatur 1050°C nicht übersteigt und in ein drittes Gefäß überführt. Dort wird bei einer Temperatur von 880 °C nachgerührt und das Reaktionsgemisch durch einen Überlauf in ein viertes Gefäß überführt. Wenn die Temperatur im dritten Gefäß 900°C übersteigt, so wird durch Absenken eines Verdrängungskörpers ein Drittel des Reaktionsgemisches in das vierte Gefäß und das Volumen solange verringert belassen, bis die Temperatur wieder auf 880°C abgesunken ist. Im vierten Gefäß wird die Temperatur auf 880°C reguliert, weiter nachgerührt und kontinuierlich entnommen. Die Reaktion wurde unter Inertgas durchgeführt. Das Reaktionsgemisch wird nach der Reaktion abgekühlt und zerkleinert. Das Tantalpulver wird aus der erkalteten und zerkleinerten Reaktionsmischung durch Waschung mit schwach angesäuertem Wasser isoliert, wobei abschließend noch mit einer Waschlösung, die Schwefelsäure und Wasserstoffperoxid enthält, nachgewaschen wird. Das Material wird mit einer Natriumdihydrogenphosphatlösung, die 1 mg Phosphor pro ml Lösung enthält, auf 20 ppm Phosphor dotiert. Nach dem Trocknen wird eine Temperaturbehandlung im Hochvakuum bei 1430°C durchgeführt. Im Anschluss daran wurde mittels der Natriumdihydrogenphosphatlösung (1mg Phosphor pro ml) der Phosphorgehalt des Tantalpulvers auf 60 ppm eingestellt. Die Pulver weisen folgende Verunreinigungen (in ppm) auf:

Mg: < 1 ppm

Na: 0,7 - 0,8 ppm

K: 3 - 5 ppm

Das erhaltene Pulver wird anschließend wie in Beispiel 1 desoxidiert. Abweichend von Beispiel 1 verwendete Desoxidationsmittels sowie die erhaltenen Pulver sind in Tabelle B2 aufgeführt:

**Verfahrensbeispiele**

Im Folgenden werden zur Realisierung der Erfindung weitere Verfahrensbeispiele angegeben.

**Verfahrensbeispiel 1**

Verfahren zur Herstellung eines Ventilmetalles, umfassend das Schmelzen eines Gemisches, das einen Ventilmetall-Precursor und Verdünnungsmittel enthält, in einem ersten Gefäß; das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird.

**Verfahrensbeispiel 2**

Verfahren nach Verfahrensbeispiel 1 und darüber hinaus umfassend das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

**Verfahrensbeispiel 3**

Verfahren nach Verfahrensbeispiel 1 oder 2, darüber hinaus umfassend das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

**Verfahrensbeispiel 4**

Verfahren nach einem oder mehreren der Verfahrensbeispiele 1 bis 3, wobei zusätzlich Ventilmetall-Precursor, Verdünnungsmittel oder eine Mischung daraus zu dem zweiten Gefäß oder zu dem dritten Gefäß oder zu beiden zugegeben wird.

**Verfahrensbeispiel 5**

Verfahren nach einem oder mehreren der Verfahrensbeispiele 1 bis 4, wobei zusätzlich ein Reduktionsmittel, Verdünnungsmittel oder eine Mischung daraus zu dem zweiten Gefäß oder zu dem dritten Gefäß oder zu beiden zugegeben wird.

**Verfahrensbeispiel 6**

Verfahren nach einem oder mehreren der Verfahrensbeispiele 1 bis 5, wobei zusätzlich ein Dotiermittel mindestens zu dem ersten und/oder zweiten und/oder dritten Gefäß zugegeben wird.

**Verfahrensbeispiel 7**

Verfahren nach einem oder mehreren der vorstehenden Verfahrensbeispiele, wobei der Reduktionsmittel mindestens ein Alkalimetall, insbesondere Natrium, enthält.

**Verfahrensbeispiel 8**

Verfahren nach einem oder mehreren der vorstehenden Verfahrensbeispiele, wobei der Ventilmetall-Precursor Kaliumheptafluorotantalat oder Kaliumheptafluoroniobat enthält.

**Verfahrensbeispiel 9**

Verfahren nach einem oder mehreren der vorstehenden Verfahrensbeispiele, wobei das Verdünnungsmittel Alkalihalogenide, Kaliumchlorid, Kaliumfluorid, Natriumchlorid, ein superkritisches Fluid oder deren Mischungen enthält.

**Verfahrensbeispiel 10**

Verfahren nach einem oder mehreren der vorstehenden Verfahrensbeispiele, wobei das Dotiermittel Alkalimetallsulfide, -sulfone, -sulfate, insbesondere Natriumsulfat, Kaliumsulfat oder deren Mischungen enthält.

B2. Erhaltene Ventilmetallpulver

| Nr. | Ventilmetall | T2 °C | Inertgas | Desoxmittel | Kap. kCV/ g | Mg < ppm | Na< ppm | K ppm | f | N2 ppm |
|-----|--------------|-------|----------|-------------|-------------|----------|---------|-------|------|--------|
| 1 | Ta | 950 | Ar | Ca | 122 | 1 | 1 | 1 | 0,86 | 170 |
| 2 | Ta | 980 | Ar | Ca | 163 | 1 | 1 | 1 | 0,88 | 159 |
| 3 | Ta | 1000 | Ar | Ca | 83 | 1 | 1 | 1 | 0,89 | 163 |
| 4 | Ta | 1020 | Ar | Ca | 78 | 1 | 1 | 1 | 0,89 | 181 |
| 5 | Ta | 930 | Ar | Ca | 156 | 1 | 1 | 1 | 0,82 | 175 |
| 6 | Ta | 950 | Ar | Ce | 177 | 1 | 1 | 1 | 0,84 | 165 |

(fortgesetzt)

| Nr. | Ventilmetall | T2 °C | Inertgas | Desoxmittel | Kap. kCV/ g | Mg < ppm | Na< ppm | K ppm | f | N2 ppm |
|---|---|---|---|---|---|---|---|---|---|---|
| 7 | Ta | 980 | Ar | Ce | 165 | 1 | 1 | 1 | 0,88 | 178 |
| 8 | Ta | 1000 | Ar | La | 180 | 1 | 1 | 1 | 0,90 | 166 |
| 9 | Ta | 1020 | Ar | La | 203 | 1 | 1 | 1 | 0,89 | 197 |
| 10 | Ta | 930 | Ar | La | 309 | 1 | 1 | 1 | 0,80 | 194 |
| 11 | Ta | 950 | N2 | La | 280 | 1 | 1 | 1 | 0,83 | 2200 |
| 12 | Ta | 980 | N2 | La | 210 | 1 | 1 | 1 | 0,86 | 2900 |
| 13 | Ta | 950 | N2 | Ca | 278 | 1 | 1 | 1 | 0,88 | 2250 |
| 14 | Ta | 980 | N2 | Ca | 223 | 1 | 1 | 1 | 0,90 | 2940 |
| 15 | Ta | 1000 | N2 | Ca | 178 | 1 | 1 | 1 | 0,90 | 4200 |
| 16 | Nb | 930 | Ar | Ca | | 1 | 1 | 1 | 0,84 | 172 |
| 17 | Nb | 950 | Ar | Ca | | 1 | 1 | 1 | 0,85 | 193 |
| 18 | Nb | 980 | Ar | Ca | | 1 | 1 | 1 | 0,89 | 182 |
| 19 | Nb | 1000 | Ar | Ca | | 1 | 1 | 1 | 0,90 | 177 |
| 20 | Nb | 1020 | Ar | Ca | | 1 | 1 | 1 | 0,89 | 194 |
| 21 | Nb | 930 | Ar | La | | 1 | 1 | 1 | 0,80 | 186 |
| 22 | Nb | 950 | Ar | La | | 1 | 1 | 1 | 0,83 | 169 |
| 23 | Nb | 980 | Ar | La | | 1 | 1 | 1 | 0,84 | 170 |
| 24 | Nb | 1000 | Ar | La | | 1 | 1 | 1 | 0,85 | 174 |
| 25 | Nb | 1020 | Ar | La | | 1 | 1 | 1 | 0,87 | 171 |
| 26 | Nb | 930 | N2 | Ca | | 1 | 1 | 1 | 0,81 | 2900 |
| 27 | Nb | 950 | N2 | Ca | | 1 | 1 | 1 | 0,86 | 4200 |
| 28 | Nb | 980 | N2 | Ca | | 1 | 1 | 1 | 0,84 | 5100 |
| 29 | Nb | 1000 | N2 | Ca | | 1 | 1 | 1 | 0,90 | 6300 |
| 30 | Nb | 1020 | N2 | Ca | | 1 | 1 | 1 | 0,88 | 6600 |
| 31 | Nb | 980 | N2 | Ce | | 1 | 1 | 1 | 0,86 | 4900 |

**Patentansprüche**

1. Ventilmetallpulver, wobei das Ventilmetallpulver Metalle der Gruppen IVB, Vb und VIb des Periodensystems der Elemente sowie deren Legierungen umfasst, **dadurch gekennzeichnet, dass** der aus REM-Bildanalysen bestimmte Kornformfaktor der Teilchen f bezüglich Mittelwert f in den Grenzen 0,65 </= f </= 1,00 liegt, wobei das Ventilmetallpulver aus Agglomeraten besteht, die durchschnittliche Körngröße von nicht mehr als 2,0 $\mu$m (FSSS) aufweisen, wobei die Agglomerate aus primären Einzelkörnern bestehen, deren durchschnittliche Korngröße nicht mehr als 0,7 $\mu$m (FSSS) beträgt und die Agglomerate eine spezifische Oberfläche nach BET von 5-15 m$^2$/g aufweisen.

2. Ventilmetallpulver nach Anspruch 1, wobei der aus REM-Bildanalysen bestimmte Kornformfaktor f bezüglich Mittelwert f in den Grenzen 0,70 </= f </= 0,95.

3. Ventilmetallpulver nach Anspruch 1 oder 2, wobei die Standardabweichung des Mittelwertes des Formfaktors f kleiner oder gleich 0,10 ist.

4. Ventilmetallpulver nach einem oder mehreren der Ansprüche 1 bis 3, wobei das Pulver einen Magnesiumgehalt von weniger als 20 ppm, bevorzugt von 10 bis 20 ppm besitzt.

**5.** Ventilmetallpulver nach einem oder mehreren der Ansprüche 1 bis 4 wobei das Pulver Primärkorngrößen d zwischen 0,1 und 2 $\mu$m mit einer Halbwertsbreite vom 0,3-fachen des Mittelwertes aufweist.

**6.** Ventilmetallpulver nach einem oder mehreren der Ansprüche 1 bis 5, wobei die Verunreinigungen mit Natrium und Kalium bei weniger als 20 ppm liegen.

**7.** Ventilmetallpulver nach Anspruch 6, wobei die Verunreinigungen mit Natrium oder Kalium bei 0 bis 5 ppm liegen.

**8.** Ventilmetallpulver nach einem oder mehreren der Ansprüche 1 bis 7, wobei das Ventilmetallpulver aus Agglomeraten besteht, die durchschnittliche Korngröße der Agglomerate nicht mehr als 1,7 $\mu$m (FSSS) beträgt.

**9.** Ventilmetallpulver nach einem oder mehreren der Ansprüche 1 bis 8, wobei das Pulver eine Agglomeratgröße von 0,35 $\mu$m bis 1 $\mu$m bestimmt nach FSSS und eine Primärpartikelgröße von 100 bis 400 nm, bestimmt durch REM-Aufnahmen, besitzt.

**10.** Ventilmetallpulver nach einem oder mehreren der Ansprüche 1 bis 9, wobei das Pulver nach Sinterung bei 1100 bis 1300 °C für 10 Minuten und anschließender Formierung bei einer Spannung von 16 bis 30 Volt eine spezifische Kapazität von 80.000 bis 300.000 $\mu$FV/g, bevorzugt von 120.000 bis 240.000 $\mu$FV/g, besonders bevorzugt von 140.000 bis 200.000 $\mu$FV/g besitzt.

**11.** Ventilmetallpulver nach Anspruch 10, wobei das Pulver nach Sinterung bei 1100 bis 1300 °C für 10 Minuten und anschließender Formierung bei einer Spannung von 16 bis 30 Volt einen Leckstrom von weniger als 1,6 nA/$\mu$FV besitzt.

**12.** Ventilmetallpulver nach einem oder mehreren der Ansprüche 1 bis 11, wobei die spezifische Oberfläche nach BET 6,3 bis 13,7 m$^2$/g, bevorzugt 9,6 bis 12,7 m$^2$/g beträgt.

**13.** Ventilmetallpulver nach einem oder mehreren der Ansprüche 1 bis 12, enthaltend 50 ppm bis 20.000 ppm Stickstoff.

**14.** Ventilmetallpulver nach Anspruch 13, wobei der Stickstoff in Form einer festen Lösung vorliegt.

**15.** Ventilmetallpulver nach einem oder mehreren der Ansprüche 1 bis 14, wobei das Ventilmetallpulver ein Niobpulver oder ein Tantalpulver ist.

**16.** Verwendung eines Ventilmetallpulvers nach einem oder mehreren der Ansprüche 1 bis 15 zur Herstellung von Kondensatoren oder zur Verarbeitung nach dem Verfahren des Kaltgasspritzens.

**Claims**

**1.** Valve metal powder, the valve metal powder comprising metals of groups IVB, Vb and VIb of the Periodic Table of the Elements and also alloys thereof, **characterized in that** the grain shape factor of the particles f determined from SEM image analyses has a mean sf within the limits 0.65 </= f </= 1.00, wherein the valve metal powder consists of agglomerates having an average grain size of not more than 2.0 $\mu$m (FSSS), wherein the agglomerates consist of primary individual grains, the average grain size of which is not more than 0.7 $\mu$m (FSSS), and the agglomerates have a specific surface area determined by the BET method of 5-15 m$^2$/g.

**2.** Valve metal powder according to Claim 1, wherein the grain shape factor f determined from SEM image analyses has a mean f within the limits 0.70 </= f </= 0.95.

**3.** Valve metal powder according to Claim 1 or 2, wherein the standard deviation of the mean of the shape factor f is less than or equal to 0.10.

**4.** Valve metal powder according to one or more of Claims 1 to 3, wherein the powder has a magnesium content of less than 20 ppm, preferably of 10 to 20 ppm.

**5.** Valve metal powder according to one or more of Claims 1 to 4, wherein the powder has primary grain sizes d of between 0.1 and 2 $\mu$m with a full width at half maximum of 0.3 times the mean.

**6.** Valve metal powder according to one or more of Claims 1 to 5, wherein the impurities being sodium and potassium amount to less than 20 ppm.

**7.** Valve metal powder according to Claim 6, wherein the impurities being sodium or potassium amount to 0 to 5 ppm.

**8.** Valve metal powder according to one or more of Claims 1 to 7, wherein the valve metal powder consists of agglomerates, the average grain size of the agglomerates being not more than 1.7 $\mu$m (FSSS).

**9.** Valve metal powder according to one or more of Claims 1 to 8, wherein the powder has an agglomerate size of 0.35 $\mu$m to 1 $\mu$m determined by FSSS and a primary particle size of 100 to 400 nm determined by SEM micrographs.

**10.** Valve metal powder according to one or more of Claims 1 to 9, wherein the powder has a specific capacitance of 80,000 to 300,000 $\mu$FV/g, preferably of 120,000 to 240,000 $\mu$FV/g, particularly preferably of 140,000 to 200,000 $\mu$FV/g, after sintering at 1100 to 1300°C for 10 minutes and subsequent formation at a voltage of 16 to 30 volts.

**11.** Valve metal powder according to Claim 10, wherein the powder has a leakage current of less than 1.6 nA/$\mu$FV after sintering at 1100 to 1300°C for 10 minutes and subsequent formation at a voltage of 16 to 30 volts.

**12.** Valve metal powder according to one or more of Claims 1 to 11, wherein the specific surface area determined by the BET method is 6.3 to 13.7 m$^2$/g, preferably 9.6 to 12.7 m$^2$/g.

**13.** Valve metal powder according to one or more of Claims 1 to 12, containing 50 ppm to 20,000 ppm nitrogen.

**14.** Valve metal powder according to Claim 13, wherein the nitrogen is present in the form of a solid solution.

**15.** Valve metal powder according to one or more of Claims 1 to 14, wherein the valve metal powder is a niobium powder or a tantalum powder.

**16.** Use of a valve metal powder according to one or more of Claims 1 to 15 for producing capacitors or for processing by the process of cold gas spraying.

**Revendications**

**1.** Poudre métallique réfractaire, la poudre métallique réfractaire comportant des métaux du groupe IVB, Vb et VIb du système périodique des éléments ainsi que leurs alliages,
**caractérisée en ce que**
le facteur de forme du grain des particules f, déterminé par analyse d'images MEB, est situé par rapport à une valeur moyenne f dans les limites de 0,65 </= f </= 1,00, la poudre métallique réfractaire étant constituée d'agglomérats dont la taille moyenne du grain n'est pas supérieure à 2,0 $\mu$m (FSSS), les agglomérats étant constitués de grains primaires distincts dont la taille moyenne du grain n'est pas supérieure à 0,7 $\mu$m (FSSS), les agglomérats présentant une surface spécifique BET de 5 à 15 m$^2$/g.

**2.** Poudre métallique réfractaire selon la revendication 1, dans laquelle le facteur de forme f du grain déterminé par analyse d'images MEB est situé par rapport à la valeur moyenne f dans les limites de 0,70 </= f </= 0,95.

**3.** Poudre métallique réfractaire selon les revendications 1 ou 2, dans laquelle l'écart type de la valeur moyenne du facteur de forme f est inférieur ou égal à 0,10.

**4.** Poudre métallique réfractaire selon l'une ou plusieurs des revendications 1 à 3, dans laquelle la poudre possède une teneur en magnésium inférieure à 20 ppm et de préférence de 10 à 20 ppm.

**5.** Poudre métallique réfractaire selon l'une ou plusieurs des revendications 1 à 4, dans laquelle la poudre présente une taille des grains primaires d comprise entre 0,1 et 2 $\mu$m, la dispersion par rapport à la valeur centrale étant de 0,3 fois la valeur moyenne.

**6.** Poudre métallique réfractaire selon l'une ou plusieurs des revendications 1 à 5, dans laquelle les impuretés sodium et potassium sont inférieures à 20 ppm.

**7.** Poudre métallique réfractaire selon la revendication 6, dans laquelle les impuretés sodium ou potassium sont de 0 à 5 ppm.

**8.** Poudre métallique réfractaire selon l'une ou plusieurs des revendications 1 à 7, dans laquelle la poudre métallique réfractaire est constituée d'agglomérats dont la taille moyenne du grain n'est pas supérieure à 1,7 $\mu$m (FSSS).

**9.** Poudre métallique réfractaire selon l'une ou plusieurs des revendications 1 à 8, dans laquelle la poudre présente une taille des agglomérats de 0,35 $\mu$m à 1 $\mu$m selon FSSS et une taille des particules primaires de 100 à 400 nm, déterminée par enregistrement MEB.

**10.** Poudre métallique réfractaire selon l'une ou plusieurs des revendications 1 à 9, dans laquelle après frittage à 1 100 - 1 300°C pendant 10 minutes et ensuite formage à une tension de 16 à 30 volts, la poudre présente une capacité spécifique de 80 000 à 300 000 $\mu$FV/g, de préférence de 120 000 à 240 000 $\mu$FV/g et de façon particulièrement préférable de 140 000 à 200 000 $\mu$FV/g.

**11.** Poudre métallique réfractaire selon la revendication 10, dans laquelle la poudre présente après frittage à 1 100 - 1 300°C pendant 10 minutes et ensuite formage à une tension de 16 à 30 volts un courant de fuite inférieur à 1,6 nA/$\mu$FV.

**12.** Poudre métallique réfractaire selon l'une ou plusieurs des revendications 1 à 11, dans laquelle la surface spécifique selon BET est de 6,3 à 13,7 m$^2$/g et de préférence de 9,6 à 12,7 m$^2$/g.

**13.** Poudre métallique réfractaire selon l'une ou plusieurs des revendications 1 à 12, contenant de 50 ppm à 20 000 ppm d'azote.

**14.** Poudre métallique réfractaire selon la revendication 13, dans laquelle l'azote présente la forme d'une solution solide.

**15.** Poudre métallique réfractaire selon l'une ou plusieurs des revendications 1 à 14, dans laquelle la poudre métallique réfractaire est une poudre de niobium ou une poudre de tantale.

**16.** Utilisation d'une poudre métallique réfractaire selon l'une ou plusieurs des revendications 1 à 15 pour la fabrication de condensateurs ou pour le traitement par un procédé de projection à gaz froid.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5442978 A
- US 4684399 A
- DE 3330455 A1
- CN 1443618